# FASCICULE DE BREVET EUROPEEN

(11) **EP 1 027 830 B1**
(45) Date de publication et mention de la délivrance du brevet: **02.05.2002**
(21) Numéro de dépôt: 00400334.9
(22) Date de dépôt: 08.02.2000
(51) Int. Cl.: A22B 5/14

(54) **Appareil de pose de ligatures d'herbière**
Apparat zum Anbringen von Ligaturen auf Speiseröhre
Apparatus for placing ligatures on oesophagus

(30) Priorité: 10.02.1999 FR 9901575
(43) Date de publication de la demande: 16.08.2000
(73) Titulaire: Société Nouvelle des Etablissements Termet Solefi, 72470 Champagne (FR)
(72) Inventeur: Landel, Philippe, 69004 Lyon (FR)
(74) Mandataire: Leszczynski, André

(56) Documents cités:
- AU-B- 479 929
- DE-A- 3 900 698
- DE-U- 9 201 720
- FR-A- 1 312 788
- US-A- 3 216 055

## Description

La présente invention concerne un appareil de pose de ligatures d'herbière.

On sait que l'on désigne sous le nom d'herbière, l'oesophage des ruminants, notamment des bovins qui doit être sectionné lors du processus d'abattage, ce qui provoque une éjection des végétaux en cours de digestion qui se répandent et souillent la viande.

Il est donc important de pouvoir refouler dans la panse du bovin les végétaux se trouvant dans l'herbière au moment de l'abattage et d'obturer l'herbière le plus près possible de la panse.

On connaît déjà par la demande de brevet australien AU-520 862 déposée en 1978 des clips de ligature d'herbière pour ovin qui sont une sorte de pince que l'on place sur l'herbière pour éviter de souiller sa viande au moment de leur éviscération Une telle pince se met en place de la manière suivante. On incise la gorge de l'animal abattu pour accéder à l'herbière que l'on saisit en extrayant un tronçon hors de la gorge. On engage un anneau fendu autour de l'herbière et on le fait glisser jusqu'au voisinage de la panse pour séparer l'herbière de tous les ligaments qui y sont attachés, après quoi on ramène l'anneau à l'extrémité de l'herbière près de la gorge. On ferme ensuite une pince de ligature sur l'herbière et on la fait glisser à la main le long de l'herbière jusqu'à la panse au moyen d'un outil d'application comportant une courte poignée formée par deux parties articulées aptes à se refermer sur la pince.

L'outil d'application décrit dans la demande de brevet australien AU-520 862 convient pour un ovin, mais est inadapté à l'herbière d'un bovin, plus longue, le bovin abattu étant en outre présenté suspendu, tête en bas, ce qui oblige l'opérateur à remonter très haut avec sa main pour mettre en place le clip de ligature.

Le brevet australien AU-479 929 décrit un dispositif de pose d'un anneau élastique sur l'herbière, se présentant sous la forme générale d'un pistolet. Un élément coulissant, muni d'un anneau ouvert à une extrémité, permet de séparer l'herbière de tous les filaments qui y sont attachés. La pose de l'anneau nécessite de trancher l'herbière, ce qui présente un risque de contamination de la viande.

La demande de brevet allemand DE 39 00 698 déposée en 1989, décrit un dispositif à vérin pneumatique selon le préambule de la revendication 1. Ce dispositif est pourvu d'une lance télescopique permettant de faire remonter un anneau élastique le long de l'herbière jusqu'à la panse. Ce dispositif se présente sous la forme d'un harpon à usage sportif, avec une poignée à l'instar du dispositif décrit dans le brevet australien AU-479 929. L'herbière est sectionnée de façon à l'engager à travers l'anneau et l'extrémité sectionnée est fixée à un noeud coulant.

Ce brevet n'a pas donné lieu, à la connaissance de la demanderesse, à un développement commercial. Des essais réalisés par la demanderesse ont montré que l'herbière tend à se rompre lors du fonctionnement du dispositif, en raison de la traction exercée par le noeud coulant. En outre, la mise en place de ce dernier n'est pas aisée, en raison du caractère visqueux de l'herbière.

La présente invention vise à fournir un appareil simple et de fonctionnement fiable qui facilite grandement les opérations de mise en place du clip de ligature d'herbière.

La présente invention a ainsi pour objet un appareil de pose de ligatures d'herbière tel que défini dans la revendication 1 .

L'immobilisation du vérin par rapport à l'herbière présente l'avantage de positionner facilement l'appareil sur l'animal indépendamment de la hauteur à laquelle celui-ci se trouve par rapport au sol.

En outre, l'appareil selon l'invention se positionne de lui-même ce qui facilite l'orientation de la tige par rapport à l'herbière, et ce d'autant plus que le poids de l'appareil et la réaction de l'herbière sur le vérin lors du déplacement de la tige contribuent à tendre l'herbière et à la rendre rectiligne dans sa portion comprise entre la panse de l'animal et l'appareil.

Selon l'invention il est avantageux d'utiliser un vérin pneumatique avec un dispositif de commande pouvant provoquer son déplacement dans les deux sens.

L'invention a encore pour objet un procédé tel que défini dans la revendication 4.

Dans le but de mieux faire comprendre l'invention, on va en décrire maintenant deux modes de réalisation donnés à titre d'exemples non limitatifs, en faisant référence au dessin annexé dans lequel :
- la figure 1 est une vue en élévation de la tête d'un bovin abattu suspendu sur une chaîne d'abattoir,
- la figure 2 est une vue en élévation d'un appareil de pose de ligatures d'herbière selon un mode de réalisation de l'invention,
- la figure 3 est une vue en élévation d'une pince de ligature d'herbière en position ouverte,
- la figure 4 est une vue analogue à la figure 3 représentant la pince en position fermée,
- la figure 5 est une vue de l'appareil de la figure 1 crocheté sur l'herbière,
- la figure 6 correspondant à la figure 5, la tige étant en position sortie.

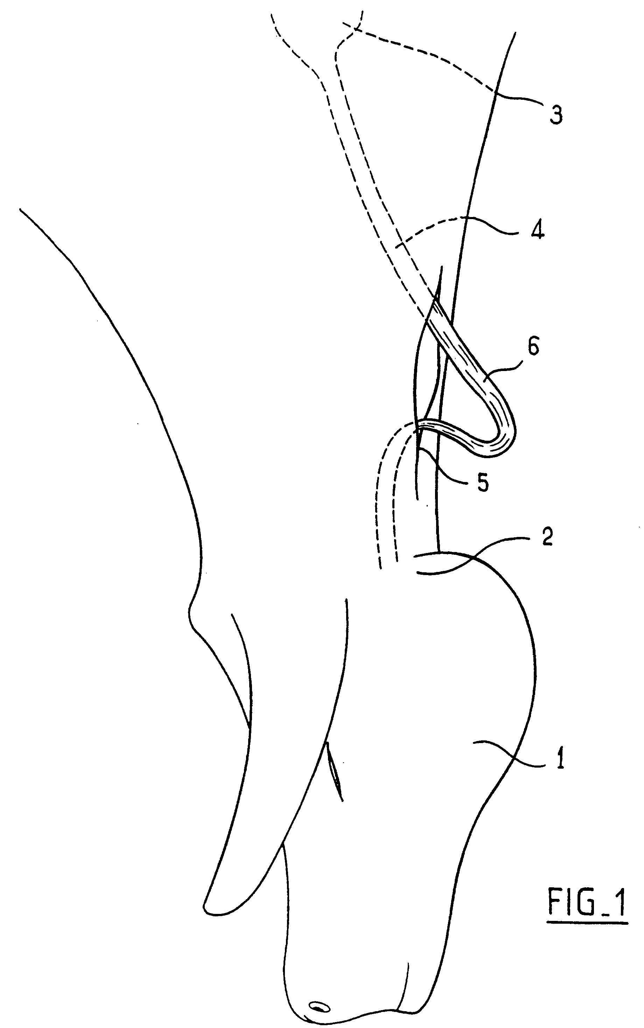

La figure 1 représente de façon schématique la tête 1 d'un bovin vu de profil.

Reliant la gorge 2 à la panse 3, se trouve l'herbière 4 qui achemine le fourrage ingurgité et régurgité par l'animal lorsqu'il s'alimente et qu'il rumine.

Comme cela est connu, on a pratiqué une incision 5 à la base de la gorge pour saisir l'herbière 4 sans la sectionner et en faire sortir un tronçon 6 à l'extérieur de l'animal.

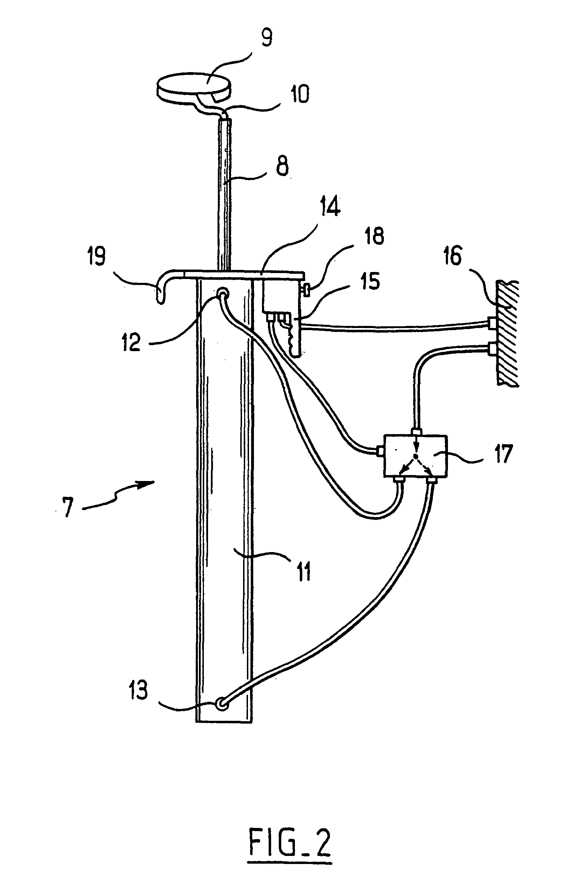

L'appareil 7 représenté à la figure 2 comporte une tige 8 dont la longueur correspond sensiblement à la longueur d'une herbière d'un boeuf, cette tige étant terminée par un anneau fendu 9 relié à la tige 8 par un support approprié 10.

La tige 8 est déplacée axialement par un vérin pneumatique à double action 11 qui comporte une alimentation en air comprimé à chacune de ses extrémités 12, 13 ce qui permet de placer la tige 8 en position sortie ou en position rentrée.

Le vérin 11 est muni d'un support 14 sur lequel est fixée une poignée de commande 15.

Cette dernière est reliée à une source d'air comprimé 16 et à une vanne à deux voies 17 qui permet de mettre la source d'air comprimé alternativement en communication avec l'une ou l'autre des deux extrémités du vérin 11 à l'aide du bouton de commande 18.

Lorsque ce dernier est au repos, la vanne à deux voies met la source d'air comprimé 16 en communication avec l'entrée d'air 12 du vérin située du côté de la tige 8, pour provoquer la rétraction de cette dernière en position rentrée, tandis que l'on enfonce le bouton de commande 18, la vanne à deux voies change de position et l'air comprimé est envoyé dans l'autre entrée d'air 13 du vérin, ce qui provoque la sortie de la tige 8.

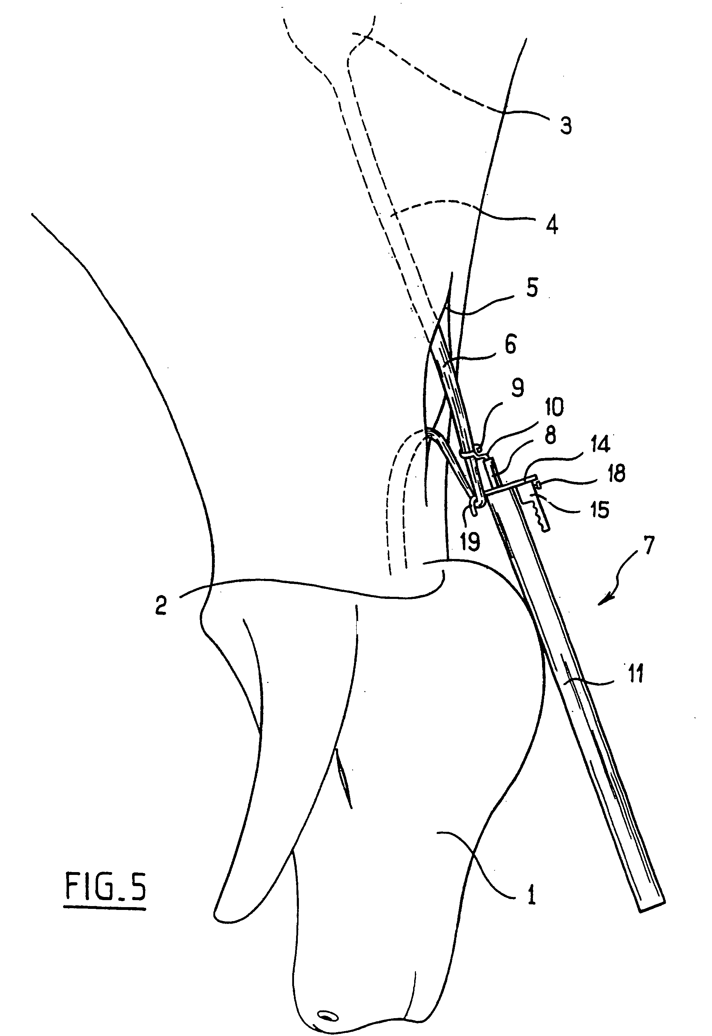

Le support 14 est muni d'un crochet 19 qui est dimensionné pour pouvoir s'engager sur l'herbière afin d'y suspendre l'appareil, comme représenté sur la figure 5.

Lorsque l'appareil est aussi suspendu à l'herbière 4, cette dernière se tend, entre sa panse et le crochet 19, ce qui a pour effet de la rendre rectiligne et de faciliter la mise en place de la pince de ligature.

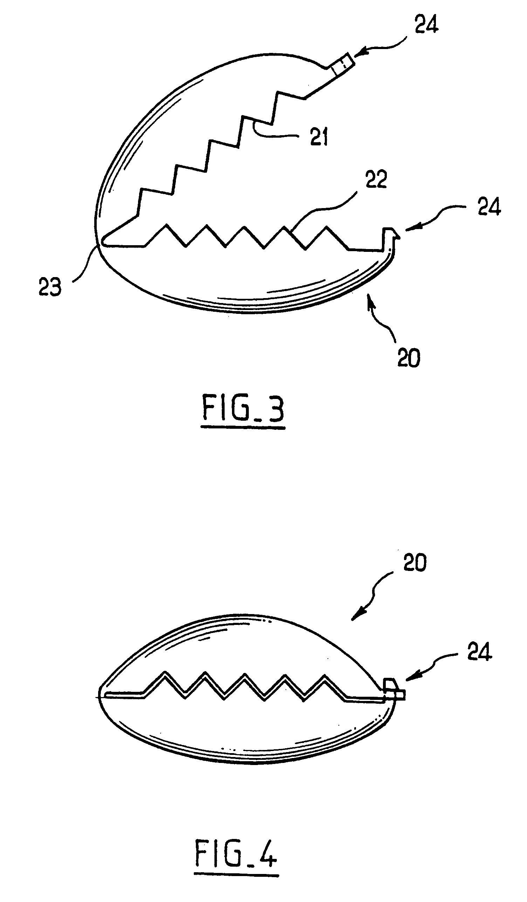

La pince de ligature 20 qui est représentée sur les figures 3 et 4 comporte deux mâchoires 21, 22 dentées qui sont de formes complémentaires et qui sont reliées par une articulation 23 qui lui permet de prendre une position ouverte et une position fermée.

A l'opposé de l'articulation 23, la pince 20 comporte un système d'encliquetage irréversible 24 pour assurer après sa mise en place une obturation complète de l'herbière.

Pour effectuer cette mise en place l'opérateur tient l'appareil dans une main tandis qu'avec l'autre il tire sur l'herbière qu'il engage dans l'anneau ouvert 9 situé à l'extrémité de la tige, puis il suspend l'appareil à l'herbière par le crochet 19, comme on le voit à la figure 5.

Il oriente ensuite l'appareil de manière à ce que l'axe du vérin soit dirigé vers la panse 3 de l'animal.

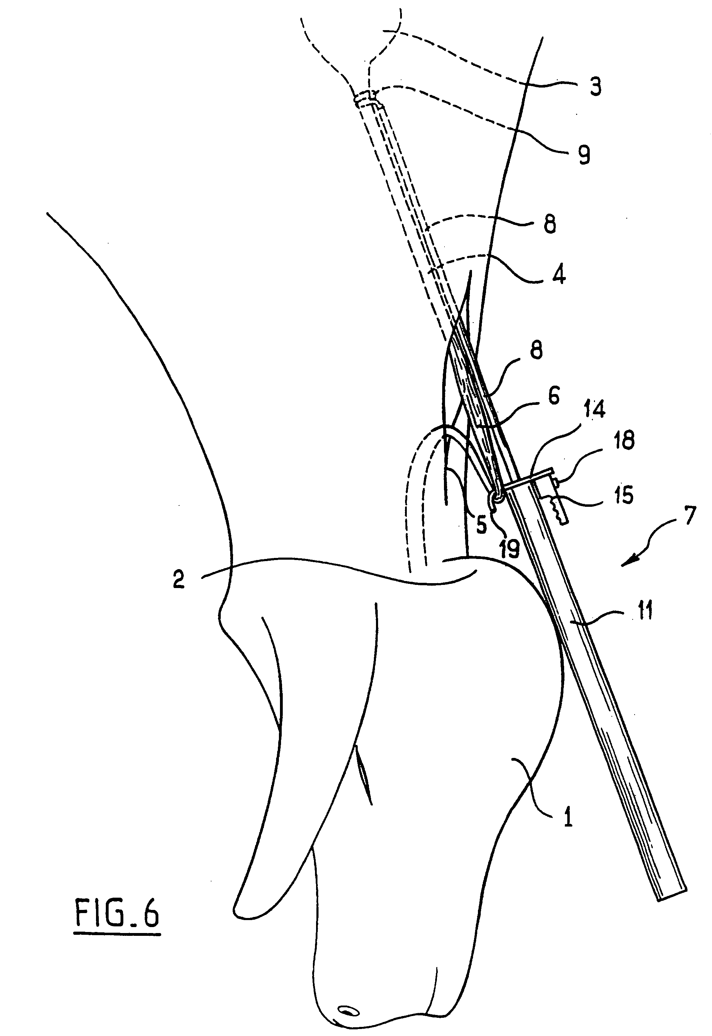

En actionnant sur le bouton de commande 18, il provoque alors le déplacement de la tige 8 et de l'anneau 9 le long de l'herbière jusqu'au voisinage de la panse, comme représenté à la figure 6.

Il relâche ensuite le bouton de commande et la tige revient en position rentrée.

On a ainsi pu sectionner les ligaments qui sont reliés à la paroi de l'herbière.

L'opérateur ferme ensuite une pince de ligature 20 sur la portion de l'herbière qui se trouve au-dessus de l'anneau 9 et il agit à nouveau sur le bouton de commande pour provoquer un second déplacement de la tige vers le haut, l'anneau 9 poussant devant lui la pince de ligature 20 qui vient se positionner à l'entrée de la panse 3.

Après relâchement du bouton de commande, la tige reprend sa position rentrée.

Il ne reste plus qu'à dégager l'herbière de l'anneau et à décrocher l'appareil de l'herbière.

Il est bien entendu que les modes de réalisation qui viennent d'être décrits ne présentent aucun caractère limitatif et qu'ils pourraient recevoir toutes modifications désirables sans sortir pour cela du cadre de l'invention, tel que défini par les revendications.

En particulier, bien que l'on ait décrit ici un vérin pneumatique, un dispositif hydraulique, électrique ou autre pourrait également convenir.

## Revendications

1. Appareil de pose de ligatures d'herbière sur des ruminants, et notamment sur des bovins, ledit appareil comprenant un anneau (9) destiné à venir s'engager autour de l'herbière (6), une tige (8) permettant de repousser l'anneau (9) le long de l'herbière jusqu'au voisinage de la panse (3) de l'animal, un vérin (11) apte à déplacer la tige (8) sur une longueur sensiblement égale à celle de l'herbière, un dispositif (19) permettant d'immobiliser le vérin par rapport à l'herbière, et un dispositif de commande (15) permettant d'actionner le vérin (11) pour déplacer la tige (8) dans les deux directions, **caractérisé par le fait que** l'anneau (9) est ouvert et **par le fait que** le dispositif permettant d'immobiliser le vérin par rapport à l'herbière est un crochet (19) solidaire du vérin (11), crochet apte à s'engager autour de l'herbière alors que cette dernière, sans avoir été sectionnée, est dégagée à l'extérieur de l'animal par une incision pratiquée dans la gorge.

2. Appareil selon la revendication précédente, **caractérisé par le fait que** le vérin (11) est pneumatique avec un dispositif de commande pouvant provoquer son déplacement dans les deux sens.

3. Appareil selon la revendication précédente, **caractérisé par le fait qu'**il comporte un bouton de commande (18) qui, lorsque actionné, provoque le déplacement de la tige le long de l'herbière et **par le fait que** lorsqu'il est relâché, la tige (8) revient en position rentrée.

4. Procédé de pose d'une ligature d'herbière sur un bovin, au moyen d'un appareil comprenant un anneau (9) destiné à venir s'engager autour de l'herbière, une tige (8) permettant de repousser l'anneau le long de l'herbière jusqu'au voisinage de la panse de l'animal, un vérin apte à déplacer la tige (8) sur une longueur sensiblement égale à celle de l'herbière et un crochet (19) solidaire du vérin, permettant d'immobiliser le vérin par rapport à l'herbière, ainsi qu'un dispositif de commande permettant d'actionner le vérin pour déplacer la tige dans les deux directions, procédé dans lequel :
a) on pratique une incision à la base de la gorge de l'animal pour saisir l'herbière sans la sectionner et en faire sortir un tronçon à l'extérieur de l'animal,
b) on engage l'anneau de l'appareil sur l'herbière,
c) on accroche le crochet (19) sur l'herbière et l'appareil est orienté de manière à ce que l'axe du vérin soit dirigé vers la panse de l'animal,
d) on provoque un premier déplacement de la tige (8) et de l'anneau (9) le long de l'herbière jusqu'au voisinage de la panse (3),
e) on ferme une pince de ligature (20) sur la portion d'herbière qui se trouve au-dessus de l'anneau,
f) on provoque un second déplacement de la tige vers le haut, l'anneau poussant devant lui la pince de ligature (20) qui vient se positionner à l'entrée de la panse,
g) on dégage l'herbière de l'anneau,
h) on décroche l'appareil de l'herbière.

## Patentansprüche

1. Vorrichtung zum Anbringen von Abbindungen der Speiseröhre bei Wiederkäuern, insbesondere Rindern mit einem um die Speiseröhre (6) legbaren Ring (9), einer Stange (8) zum Zurückschieben des Rings (9) längs der Speiseröhre bis in die Nähe des Magens (3) des Tieres, einem Zylinder (11) zum Verschieben der Stange (8) um eine der Länge der Speiseröhre im wesentlichen gleiche Länge, einer Einrichtung (19) zum Festlegen des Zylinders relativ zu der Speiseröhre, und einer Betätigungseinrichtung (15) zum Antrieb des Zylinders (11), um die Stange (8) in beiden Richtungen zu verschieben, **dadurch gekennzeichnet, daß** der Ring (9) offen ist und daß die Einrichtung zum Festlegen des Zylinders relativ zu der Speiseröhre ein an dem Zylinder (11) befestigter Haken (19) ist, der sich um die Speiseröhre legt, während diese, ohne zerschnitten worden zu sein, durch einen Schnitt in die Kehle außerhalb des Tieres freigelegt wird.

2. Vorrichtung nach Anspruch 1, **dadurch gekennzeichnet, daß** der Zylinder (11) pneumatisch ist und eine Betätigungseinrichtung aufweist, die ihn in beiden Richtungen verschieben kann.

3. Vorrichtung nach dem vorhergehenden Anspruch, **gekennzeichnet durch** einen Betätigungsknopf (18), der bei Betätigung eine Verschiebung der Stange längs der Speiseröhre bewirkt, und daß bei dessen Freigabe die Stange (8) in ihre zurückgezogene Stellung zurückkehrt.

4. Verfahren zum Anbringen einer Abbindung der Speiseröhre bei einem Rind mittels einer Vorrichtung, die einen um die Speiseröhre legbaren Ring (9), eine Stange (8) zum Zurückschieben des Rings längs der Speiseröhre bis in die Nähe des Magens des Tieres, einen Zylinder zum Verschieben der Stange (8) um eine der Länge der Speiseröhre im wesentlichen gleiche Länge, und einen an dem Zylinder befestigten Haken (19) zum Festlegen des Zylinders relativ zu der Speiseröhre umfaßt, während eine Betätigungseinrichtung den Antrieb des Zylinders (11) gestattet, um die Stange in beiden Richtungen zu verschieben, wobei in dem Verfahren;
a) am Grund der Kehle des Tieres ein Schnitt wird gelegt, um die Speiseröhre, ohne sie zu zerschneiden, zu erfassen und ein Teilstück davon aus dem Tier herauszuführen,
b) der Ring der Vorrichtung wird an der Speiseröhre angelegt,
c) der Haken (19) wird um die Speiseröhre gehakt, und die Vorrichtung wird so ausgerichtet, daß die Achse des Zylinders in Richtung des Magens des Tieres weist,
d) es wird eine erste Verschiebung der Stange (8) und des Ringes (9) längs der Speiseröhre bis in die Nähe des Magens (3) bewirkt,
e) um den über dem Ring gelegenen Teil der Speiseröhre wird eine Abbindezange (20) geschlossen,
f) es wird eine zweite Verschiebung der Stange nach oben bewirkt, wobei der Ring die Abbindezange (20) vor sich her schiebt, die an den Eingang des Magens gelangt,
g) der Ring wird von der Speiseröhre gelöst,
h) die Vorrichtung wird von der Speiseröhre abgehakt.

## Claims

1. Apparatus for applying oesophagus ligatures to ruminants, in particular cattle, said apparatus comprising a ring (9) intended to engage around the oesophagus (6), a rod (8) enabling the ring (9) to be pushed along the oesophagus to the vicinity of the animal's rumen (3), an actuator (11) able to move the rod (8) over a length substantially equal to that of the oesophagus, a device (19) allowing the actuator to be immobilised in relation to the oesophagus, and a control device (15) allowing the actuator (11) to be activated in order to move the rod (8) in both directions, **characterised in that** the ring (9) is open and **in that** the device allowing immobilisation of the actuator in relation to the oesophagus is a hook (19) of one piece with the actuator (11), said hook being able to engage around the unsevered oesophagus after it has been withdrawn from the animal via an incision made in the throat.

2. Apparatus according to the previous claim, **characterised in that** the actuator (11) is pneumatic with a control device enabling it to be moved in both directions.

3. Apparatus according to the previous claim, **characterised in that** it comprises a control button (18) which, when activated, causes the movement of the rod along the oesophagus and **in that** when released, the rod (8) returns to its original position.

4. Process for applying an oesophagus ligature to a bovine animal, by means of an apparatus comprising a ring (9) intended to engage around the oesophagus, a rod (8) enabling the ring to be pushed along the oesophagus to the vicinity of the animal's rumen, an actuator able to move the rod (8) over a length approximately equal to that of the oesophagus, and a hook (19) of one piece with the actuator, allowing the actuator to be immobilised in relation to the oesophagus, and a control device allowing the actuator to be activated in order to move the rod in both directions, in which procedure:
a) an incision is made in the base of the animal's throat to grasp the oesophagus without severing it and to withdraw a section outside the animal,
b) the ring of the device is engaged on the oesophagus,
c) the hook (19) is attached to the oesophagus and the device oriented such that the axis of the actuator is directed towards the animal's rumen.
d) a first movement is made of the rod (8) and the ring (9) along the oesophagus as far as the vicinity of the rumen (3),
e) a ligature clamp (20) is closed on the part of the oesophagus above the ring,
f) a second movement is made of the ring upwards, the ring pushing before it the ligature clamp (20) which becomes positioned at the entrance to the rumen.
g) the oesophagus is released from the ring,
h) the device is unhooked from the oesophagus.
